# FASCICULE DE BREVET EUROPEEN

(11) **EP 3 808 906 B1**
(45) Date de publication et mention de la délivrance du brevet: **04.10.2023**
(21) Numéro de dépôt: 20201821.4
(22) Date de dépôt: 14.10.2020
(51) Int. Cl.: E02F 3/88, E02B 8/02, E02F 3/90, E02F 9/06, B62D 55/26, B60F 3/00, B62D 55/084, B62D 55/253, B62D 55/06, B62D 57/04, B63G 8/22, B63H 19/08

(54) **ROBOT, SYSTÈME ET PROCÉDÉ DE CURAGE**
ROBOTER, SYSTEM UND VERFAHREN ZUM AUSBAGGERN
ROBOT, SYSTEM AND METHOD FOR CLEANING

(30) Priorité: 15.10.2019 FR 1911501; 30.01.2020 FR 2000900
(43) Date de publication de la demande: 21.04.2021
(73) Titulaire: Watertracks, 34470 Perols (FR)
(72) Inventeur: GAILLARD, Raphaël, 34570 Vailhauques (FR); GAUCH, Frédéric, 13008 Marseille (FR); ALCALA, Frédéric, 13740 Le Rove (FR)
(74) Mandataire: Rhein, Alain

(56) Documents cités:
- EP-A1- 2 644 781
- EP-B1- 2 644 781
- WO-A1-2019/148943
- CN-A- 108 517 914
- CN-A- 110 629 823
- FR-A1- 2 375 395
- GB-A- 2 543 764
- US-A- 4 315 326
- US-A- 5 139 317
- US-A1- 2006 225 771
- US-A1- 2019 234 046
- US-B2- 6 520 602

## Description

[La présente invention entre dans le domaine du curage de fonds aquatiques et plus particulièrement de curage de fonds d'un bassin de rétention situé en amont d'un barrage hydroélectrique.

Les solutions techniques existantes présentent des inconvénients d'un point de vue écologique et notamment de la gestion de la turbidité de l'eau en aval du barrage. En effet, des études montrent que l'établissement d'un barrage sur un cours d'eau entraine une baisse de la biodiversité en aval du barrage. En parallèle, l'établissement d'un barrage stoppe l'écoulement des sédiments qui s'accumulent dans le bassin de rétention du barrage. Or, l'accumulation de sédiment dans le bassin de rétention d'un barrage conduit à une perte de rendement de production électrique du barrage. Notamment au travers d'une diminution du volume d'eau situé en amont du barrage. Voir dans des cas extrêmes d'une occlusion partielle ou totale des organes de vidange de fond.

Cette perte de rendement pousse les exploitants à effectuer des opérations de curage des fonds aquatiques du bassin de rétention.

Pour l'heure le curage des bassins de rétention peut être effectué au travers d'opération ponctuelle lourde qui consiste à curer les fonds aquatiques suite à une mise hors d'eau du bassin de rétention. Cette opération est lourde d'un point de vue logistique et présente l'inconvénient majeur de stopper totalement la production d'énergie électrique pendant l'opération de curage. De surcroît, ces opérations de curage peuvent durer plusieurs semaines en fonction des dimensions du bassin de rétention. De plus, cette opération de curage hors d'eau est dévastatrice d'un point de la biodiversité et ne se préoccupe pas des problématiques de resédimentation du cours d'eau situé en aval du barrage. La plupart du temps les boues de sédiments prélevées dans le bassin de rétention sont évacuées à destination de sites de déchargement qui sont très peu vertueux d'un point de vue écologique. Les problèmes écologiques et les pertes économiques liés au curage hors d'eau poussent les exploitants de barrage à employer d'autres techniques de curage.

Ainsi les techniques de habituelles de dragage de surface sont également employées pour curer les fonds aquatiques des bassins de rétention. Cependant, un dragage de surface implique le respect d'une cote d'eau du bassin de rétention qui conduit également les exploitants à réduire leur production d'énergie électrique au cours des opérations de curage. Par ailleurs, le dragage de surface ne prévoit aucune solution afin de respecter le biotope et la biodiversité qui est établie en aval du barrage. GB 2 543 764 et WO 2019/148943 sont des exemples de robots subaquatiques de l'art antérieur.

Afin de pallier ces problématiques, la demanderesse a développé une solution technique permettant de curer le fond d'une étendue d'eau en tenant compte de certaines contraintes. Dans le cadre d'un barrage hydroélectrique, la solution technique décrite dans ce document permet de respecter les contraintes de fonctionnement du barrage telles que le respect de la cote d'eau du bassin de rétention, la turbidité de l'eau en aval, le débit d'eau turbiné par les turbines du barrage au cours de la production d'électricité.

A cet effet, un premier aspect de l'invention concerne un robot subaquatique de curage configuré pour se déplacer et curer des fonds aquatiques, le robot subaquatique comportant :
- un châssis qui s'étend longitudinalement selon un axe Y-Y, le châssis comprenant une partie centrale et deux ailes situées de part et d'autre de la partie centrale,
- deux chenilles de déplacement qui définissent les dimensions hors-tout du robot subaquatique selon l'axe Y-Y, chaque chenille de déplacement étant solidaire d'une aile du châssis, les chenilles de déplacement sont configurées pour se déplacer sur un sol vaseux, et
- une tête de dragage montée sur le châssis, la tête de dragage étant configurée pour excaver et aspirer des sédiments naturels,
- des moyens d'ajustement de la flottabilité du robot subaquatique, les moyens d'ajustement permettent d'ajuster la poussée d'Archimède qui s'applique sur le robot de sorte que les chenilles de déplacement parviennent à prendre appui sur un milieu hétérogène dont la densité fluctue tel qu'un sol vaseux,

Le robot subaquatique selon l'invention se caractérise en ce en ce que la tête de dragage est solidarisée selon un axe central X-X de la partie centrale du châssis, la tête de dragage étant comprise dans les dimensions hors tout du robot subaquatique selon l'axe Y-Y.

L'utilisation d'un robot de curage subaquatique permet de s'affranchir des contraintes de côte d'eau des méthodes de dragage classiques. Ainsi, l'invention permet de curer les fonds aquatiques sans pour autant réduire l'activité économique liée à l'étendue d'eau canal, barrage etc. Dans le cadre d'un barrage, le robot selon l'invention permet de curer le fond du bassin de rétention sans pour autant réduire la production d'énergie électrique.

Dans ce contexte, la position de la tête dragage selon l'axe X-X contribue à équilibrer le poids en eau du robot et ainsi de trouver un compromis entre flottabilité et poussée verticale lors d'une immersion et/ou une émersion du robot subaquatique selon une trajectoire verticale au sein de la colonne d'eau. Il est à noter que les moyens d'ajustement de flottabilité participent également à l'établissement de cet équilibre.

Il est ainsi possible de tracter le robot au-dessus du site d'excavation et de l'immerger directement depuis la surface. Ceci permet de faciliter l'accès au site de dragage et d'éviter un déplacement sur les fonds aquatiques depuis la rive jusqu'au site de dragage. Ce déplacement peut être long et impliquer des manoeuvres complexes de contournement d'embâcles non-réductibles et/ou d'obstacles.

De plus, la position de la tête de dragage fait qu'elle ne sort jamais des dimensions hors-tout du robot selon l'axe Y-Y. Ceci permet de préserver la tête de dragage dans le cas où, lors d'un déplacement sur les fonds aquatiques, le robot entre en collision avec un embâcle non réductible qui n'apparait pas au sonar.

Selon une première caractéristique du robot subaquatique, chaque chenille comporte un bâtit et au moins une bande souple montée rotative autour d'un bâtit, la bande souple étant équipée de lames qui s'étendent longitudinalement entre deux bords latéraux de la bande souple. Ce type de chenille permet d'améliorer l'adhérence du robot sur des surfaces meubles telles que les fonds aquatiques.

De plus, le robot subaquatique comporte, d'une part, des moyens d'entrainement en rotation de chaque chenille, et d'autre part, des moyens de guidage en rotation de chaque chenille par glissement, le glissement étant guidé selon un axe longitudinal médian du bâtit de chaque chenille. Équiper le robot subaquatique de moyens de guidage en rotation par glissement permet de limiter le risque que des embâcles non réductibles ne viennent entraver les organes d'actionnement du déplacement du robot.

En particulier, les moyens de guidage d'entrainement comportent des patins solidaires d'une bande souple montée en rotation autour du bâtit d'une chenille, les moyens de guidage comprenant un rail disposé selon l'axe longitudinal médian du bâtit d'une chenille, les patins étant engagés en glissement dans le rail.

Selon une deuxième caractéristique, le robot subaquatique comprend un régleur solidaire de la partie centrale du châssis, le régleur est configuré pour faire varier de façon à fixer le poids en eau du robot subaquatique. Le régleur participe à établir un équilibre de flottabilité lors d'une immersion et/ou d'une émersion du robot au sein de la colonne d'eau.

Selon une troisième caractéristique du robot subaquatique, la tête de dragage est mobile au moins entre deux positions, une première position déployée dans laquelle la tête de dragage est saillante des chenilles de déplacement, et une deuxième position dans laquelle la tête de dragage est rétractée à proximité du châssis. De surcroît, la tête de dragage peut prendre au moins deux positions déployées supplémentaires décalées radialement par rapport à la première position déployée. De préférence, chaque position déployée supplémentaire est décalée selon un angle compris entre 10° et 50° par rapport à la première position déployée. Cette caractéristique contribue à augmenter la surface de curage du robot dans une position statique. En dynamique, la position orientable de la tête de dragage favorise une orientation de la tête de dragage en fonction de la direction de déplacement du robot.

Selon une quatrième caractéristique du robot subaquatique, les moyens d'ajustement comportent au moins un ballast solidaire du châssis, le ballast étant couplé avec au moins un compresseur d'air qui assure le remplissage ou la vidange du ballast en fonction de la densité du fond aquatique sur lequel le robot se déplace. Ainsi, il est avantageusement possible de faire varier le poids en eau du robot pour optimiser sa progression sur les fonds aquatiques vaseux.

Selon une cinquième caractéristique du robot subaquatique, la tête de dragage comprend une ouverture équipée de moyens d'excavation et d'une pompe aspirant et diluant les sédiments d'un fond aquatique. Cette caractéristique permet d'extraire et de diluer les sédiments des fonds aquatiques.

Selon une sixième caractéristique, le robot subaquatique comporte un conduit de dragage évacuant des sédiments dilués avec de l'eau, le conduit de dragage étant relié à la tête de dragage. Le conduit de dragage contribue à extraire les sédiments du site à traiter. Avantageusement, le conduit de dragage comporte, d'une part, des moyens de mesure du débit des sédiments dilués à l'eau, et d'autre part, des moyens de mesure densimétrique afin de contrôler la concentration en sédiments dilués. Ainsi, il est possible de faire varier le débit et la concentration de matière sèche dans le flux extrait du site à traiter.

Selon une huitième caractéristique, le robot subaquatique comporte des moyens de communication avec un poste de commande distant, le robot comportant également des moyens d'alimentation en énergie qui sont reliés au poste de commande.

Un deuxième aspect de l'invention concerne un système de curage des fonds aquatiques d'une retenue d'eau d'un barrage.

Selon l'invention, le système de curage se caractérise en ce qu'il comporte :
- un robot subaquatique défini selon le premier aspect de l'invention,
- des moyens d'alimentation en énergie du robot subaquatique,
- un poste de commande à distance du robot subaquatique,
- un conduit de dragage dont l'échappement de sédiments dilués est relié à un cours d'eau en aval du barrage,
- des moyens de mesure du débit de turbinage du barrage, et
- des moyens de communication configurés reliant les moyens de mesure et le robot au poste de commande.

Avantageusement, le système de curage selon l'invention permet de curer un bassin de rétention d'un barrage sans réduire l'activité de production électrique du barrage. Dans le même temps, le système selon l'invention permet de contrôler la concentration en sédiments dans le flux de dragage qui est relargué en aval du barrage. Ceci permet de diffuser, les sédiments extraits, dans le cours d'eau aval du barrage sans perturber la faune et la flore établies dans ce cours d'eau. De surcroît, cela permet de resédimenter les cours d'eau situés en aval d'un barrage.

Le système de curage peut comporter, en outre, au moins un système de triangulation acoustique qui permet de contrôler le déplacement du robot subaquatique sur des fonds aquatiques.

Un troisième aspect de l'invention se rapporte à un procédé de curage des fonds aquatiques d'une retenue d'eau d'un barrage.

Selon l'invention, le procédé se caractérise en ce qu'il comporte les étapes suivantes :
- Immerger un robot subaquatique selon le premier aspect de l'invention,
- Curer les fonds aquatiques à l'aide du robot,
- Mesurer le débit de turbinage dudit barrage,
- Ajuster le débit et/ou la concentration en sédiments dans le flux de dragage aspiré par le robot subaquatique, au cours de ces opérations de curage, en fonction du débit de turbinage dudit barrage, et
- Rejeter les sédiments dilués à un taux déterminé en aval dudit barrage.

Comme le système de curage de l'invention, le procédé de curage permet d'opérer l'entretien du bassin de rétention lors du fonctionnement normal d'un barrage hydroélectrique. De plus, le procédé de curage selon l'invention s'inscrit dans une démarche éco-responsable en contrôlant le taux de turbidité des sédiments extraits du bassin de rétention en vue de les relarguer dans le cours d'eau situé en aval du barrage.

D'autres particularités et avantages apparaitront dans la description détaillée qui suit, d'un exemple de réalisation, non limitatif, de l'invention illustré par les figures 1 à 7 placées en annexe et dans lesquelles :
[Fig. 1] est une représentation d'un système de curage conforme à un aspect de l'invention.
[Fig. 2] est une représentation en perspective d'un robot subaquatique conforme à l'invention et intégré au dans le système de curage de la figure 1.
[Fig. 3] est une représentation schématique d'une coupe longitudinale d'une chenille de déplacement du robot subaquatique de la figure 2.
[Fig. 4] est une représentation du robot de la figure 2 qui comporte une tête de dragage dans une première position déployée.
[Fig. 5] est une représentation du robot de la figure 2 qui comporte une tête de dragage dans une deuxième position rétractée.
[Fig. 6] est une représentation du robot de la figure 2 qui comporte une tête de dragage dans une autre position déployée.
[Fig. 7] est une représentation du robot de la figure 2 qui comporte une tête de dragage dans une autre position déployée.

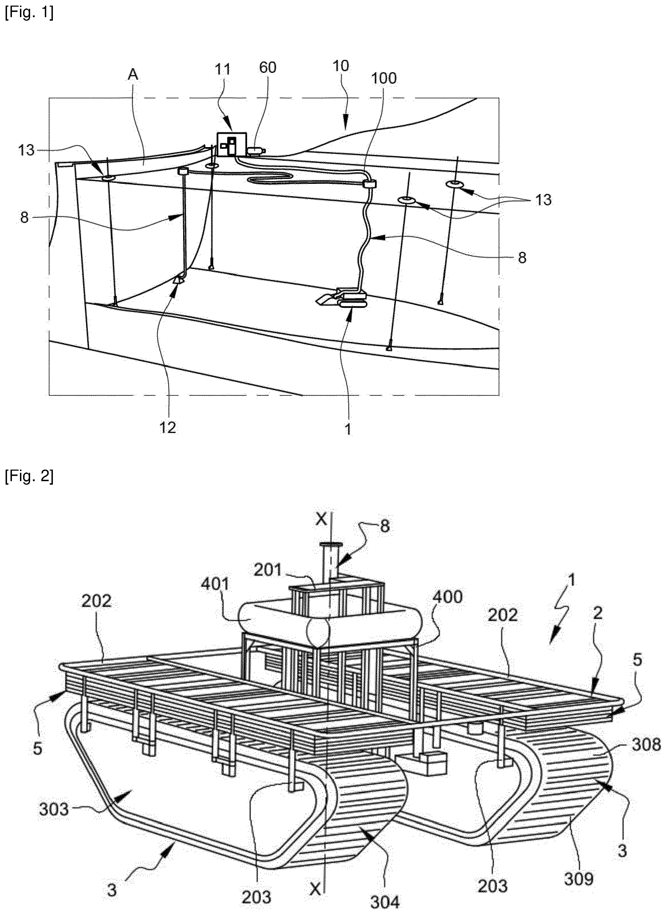

Un premier aspect de l'invention concerne un robot subaquatique 1 de curage. Le robot subaquatique 1 est configuré pour se déplacer et curer des fonds aquatiques. Ainsi, le robot 1 selon l'invention peut être utile dans différents sites de curage de fonds aquatiques. Le robot 1 peut être utile pour curer des fonds d'un port, d'une voie maritime telle qu'un canal, un lit de fleuve, un grau, un delta d'un cours d'eau etc. La figure 1 illustre une application particulièrement intéressante qui consiste au curage d'un bassin de rétention d'un barrage A.

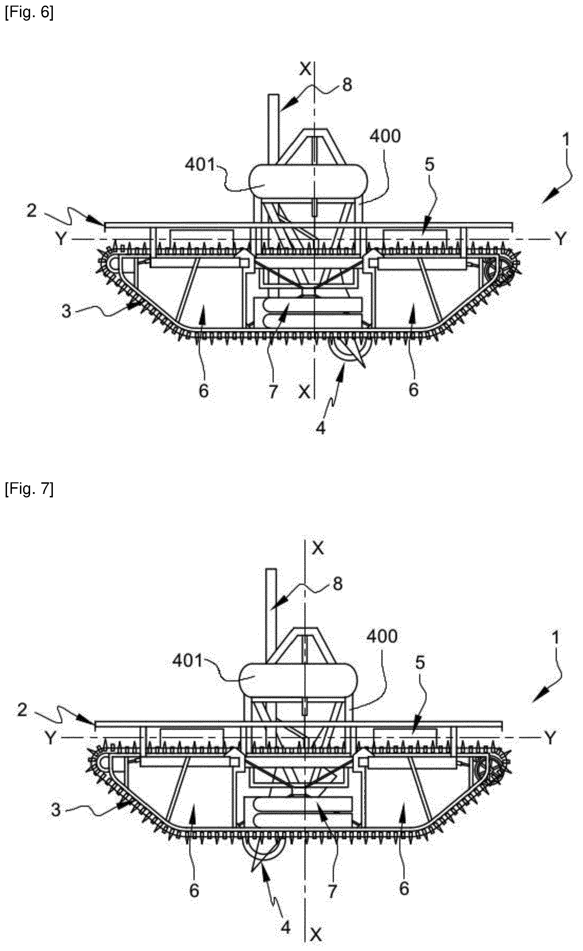

Comme illustré aux figures 2 à 7, le robot subaquatique 1 comporte un châssis 2. Le châssis 2 est formé par une structure tubulaire. La structure du châssis 2 s'étend selon un plan P. Cette structure se divise en trois parties. Comme illustrée à la figure 2, la structure comprend un corps central 201 et deux ailes 202 s'étendant longitudinalement de part et d'autre du corps central 202. Le corps central 201 et les deux ailes s'étendent selon un axe Y-Y parallèle du plan P (illustré aux figures 6 et 7).

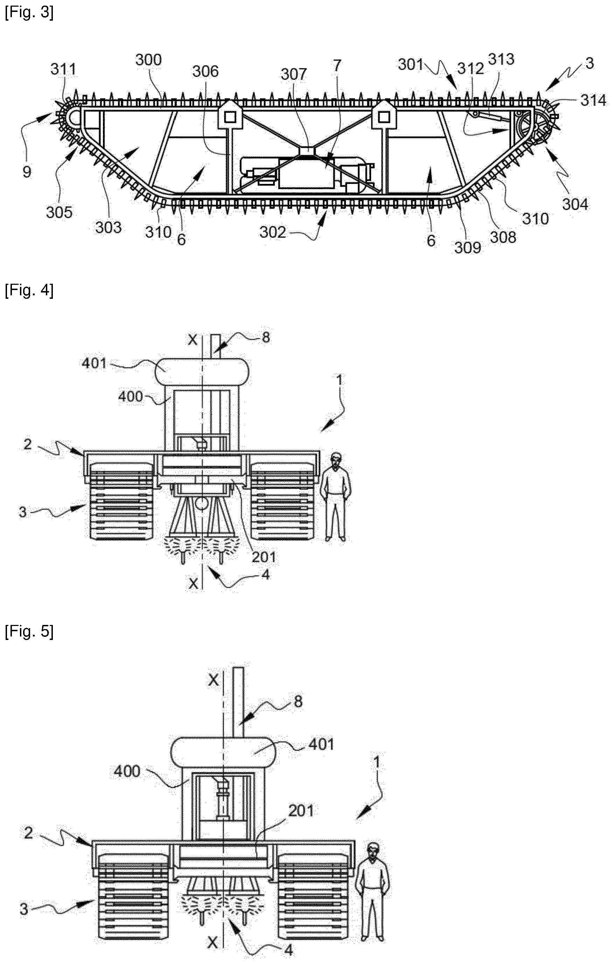

Le robot subaquatique 1 comprend deux chenilles 3 de déplacement qui sont montées de part et d'autre du châssis 2. Chaque chenille 3 comprend un bâtit qui est supporté par une armature 300. Dans l'exemple illustré à la figure 3, l'armature 300 comprend une face supérieure 301 et une face inférieure 302 opposées l'une de l'autre. La face inférieure 302 s'étend sur une distance inférieure par rapport la face supérieure 301. Ceci contribue à former une armature 300 de section longitudinale trapézoïdale. L'armature 300 comprend également deux faces latérales 303 disposées de part et d'autre de la face supérieure 301 et de la face inférieure 302. Enfin, l'armature 300 comprend une face avant 304 et une face arrière 305 qui sont inclinées et relient les faces supérieure 301 et inférieure 302. Le bâtit comprend également un habillage étanche qui est fixé à l'armature 300 (illustré à la figure 2). L'étanchéité peut être réalisée à l'aide de joints adaptés.

Dans l'exemple illustré à la figure 2, chaque chenille 3 est reliée à une aile 202 du châssis 2. Il est à noter qu'il est possible de faire varier les dimensions du corps central 201. Ceci permet de faire varier l'écartement entre les deux chenilles 3 qui correspond à la voie du robot 1. Comme illustrées aux figures 2, 6 et 7, les deux ailes 202 s'étendent longitudinalement selon une distance supérieure à la distance selon laquelle s'étend le corps central 201. De fait, les dimensions hors-tout du robot subaquatique 1 selon l'axe Y-Y sont définis par les chenilles 3.

Plus précisément, chaque chenille 3 est reliée au châssis 3 par des segments de liaison 203 qui s'étendent depuis la face inférieure du châssis 2 vers l'armature 300 de la chenille 3. En particulier, les segments de liaison 203 solidarisent le châssis 3 à la face supérieure 301 de l'armature 300 de la chenille 3. Les segments de liaison 203 font office d'entretoises entre le châssis 2 et les chenilles 3.

Avantageusement, les chenilles 3 de déplacement sont configurées pour se déplacer sur un sol vaseux. En effet, le sol aquatique est formé d'un milieu hétérogène qui ne constitue pas une surface solide sur laquelle il est possible de prendre facilement appui. De préférence, une chenille 3 de déplacement comporte au moins une bande souple 308 qui est montée rotative autour de l'armature 300. Une bande souple 308 peut être conçue en caoutchouc ou dans une autre matière élastique. Il est également possible d'assembler plusieurs bandes souples 308 pour former une chenille 3. Dans cette configuration, les bandes sont assemblées et solidarisées longitudinalement bord à bord.

Comme illustrée notamment aux figures 2 et 3, une chenille 3 comporte également des lames 309. Les lames 309 sont disposées à intervalle régulier sur une bande souple 308. Une lame 309 s'étend longitudinalement entre chaque bord latéral d'une bande souple 308. Chaque lame 309 est saillante d'une face externe de chaque bande souple 308 avec laquelle elle est solidaire. Les lames 309 peuvent être réalisées dans un métal non corrosif ou traité contre la corrosion tel que l'aluminium, l'acier ou l'inox.

De plus, comme illustré à la figure 3, chaque chenille 3 comporte des moyens de guidage en rotation par coulissement selon l'axe médian longitudinal du bâtit d'une chenille 3. Cette conception s'oppose aux chenilles 3 traditionnelles qui sont constituées par des plaques assemblées les unes avec les autres qui comporte chacune des maillons de manière à s'engrainer directement sur une roue d'entrainement des chenilles. Ici, les moyens de guidage en rotation par coulissement constituent des moyens de transmission disposés entre les chenilles 3 et les moyens d'entrainement en rotation des chenilles 3.

Plus précisément, les moyens de guidage comprennent des patins 310 qui sont disposés à intervalle régulier sur une face interne de chaque bande souple 308. Ici, la face interne de chaque bande souple 308 fait face à l'armature 300. Les patins 310 sont disposés selon un axe longitudinal de chaque bande souple 308. Les moyens de guidage comportent en outre un rail dans lequel les patins 310 sont montés coulissants. Le rail est disposé selon un axe médian longitudinal du bâtit d'une chenille 3. Avantageusement, l'utilisation de moyen de guidage en rotation par glissement permet d'éviter que de la vase ou des embâcles ne viennent entraver le système d'entrainement en rotation des chenilles 3.

Par ailleurs, le robot subaquatique 1 comporte des moyens moteurs couplés à des moyens d'entrainement en rotation des chenilles 3. En particulier, les moyens d'entrainement comportent un pignon d'entrainement 311 ménagé à une extrémité de l'armature 300. Dans cet exemple, le pignon d'entrainement 311 est disposé à la jonction entre la face arrière 305 et la face supérieure 301 de l'armature 300. Il est à noter que le pignon d'entrainement 311 peut également être appelé barbotin. Le pignon d'entrainement 311est actionné par des moyens moteurs disposés dans le bâtit de chaque chenille 3 (non illustré). De préférence, les moyens moteurs sont disposés au centre de chaque chenille 3. Ceci afin de répartir au mieux la masse du robot 1. En sus, les moyens d'entrainement peuvent comprendre un réducteur de vitesse mécanique intercalé entre les moyens moteurs et les moyens d'entrainement. La répartition à intervalle régulier des patins 310 forme avantageusement un organe d'entrainement cranté de la bande souple 308.

Comme illustré à la figure 3, chaque chenille comporte un système de tension 312 de la bande souple 308. Le système de tension 312 est positionné à une extrémité du bâtit d'une chenille 3. Dans cet exemple, le système de tension 312 est positionné à une jonction entre la face avant 304 et la face supérieure 301 de l'armature 300. Le système de tension 311 comporte un vérin 312 solidaire, d'une part, de la face supérieure 301 de l'armature 300, et d'autre part, d'une roue libre 314 engagée avec la bande souple 308. Le système de tension 312 contribue à maintenir la bande souple 308 de la chenille 3 sous tension.

Par ailleurs, le robot subaquatique 1 comprend avantageusement des moyens d'ajustement de la flottabilité de la masse du robot subaquatique 1. Les moyens d'ajustement sont configurés pour ajuster la poussée d'Archimède qui s'applique sur le robot aquatique 1. A cet effet, les moyens d'ajustement sont configurés pour faire varier le poids en eau du robot subaquatique 1. De fait, il est possible d'ajuster le poids en eau du robot 1 en fonction de l'évolution de l'hétérogénéité du sol. Ainsi, les chenilles 3 parviennent à prendre appui sur un milieu hétérogène dont la densité fluctue.

Comme illustrés à la figure 3, les moyens d'ajustement comportent au moins un ballast 6. Le ballast 6 est solidaire du châssis 2. En pratique, le ballast 6 est couplé avec au moins un compresseur 60 à air. Le compresseur 60 à air peut être embarqué dans le robot 1 ou disposé en surface. Dans l'exemple de la figure 1, le compresseur 60 est disposé en surface. Le compresseur 60 assure le remplissage ou la vidange du ballast 6, en eau, en fonction de la densité du fond aquatique sur lequel le robot 1 se déplace.

Selon un premier mode de réalisation avantageux, les moyens d'ajustement comportent deux ballasts 6. Selon ce mode de réalisation, les deux ballasts 6 sont respectivement disposés dans une chenille 3 de déplacement.

Selon un deuxième mode de réalisation préférentiel, les moyens d'ajustement comportent quatre ballasts 6. Selon le deuxième mode de réalisation, les quatre ballasts 6 sont respectivement disposés par paire dans une chenille 3 de déplacement. De préférence, selon l'invention, chaque ballast 6 est disposé dans l'armature 300 de chaque chenille 3. Selon cette configuration, chaque chenille 3 de déplacement peut embarquer un compresseur 60 à air pour gérer le remplissage des ballasts 6.

Chaque ballast 6 possède une capacité de stockage d'air et/ou d'eau comprise entre 0,5 et 2 m³. De préférence, chaque ballast 6 possède la même capacité de stockage d'air et/ou d'eau. Ceci contribue à obtenir une répartition égale du poids en eau sur chaque chenille 3.

Cette caractéristique assure une prise d'appui constante pour chaque chenille 3 de déplacement en faisant varier le poids en eau de chaque chenille 3. Il est à noter qu'il est important de synchroniser les variations de poids en eau de chaque chenille 3 afin que le robot 1 puisse progresser de façon régulière sur les fonds aquatiques. A cet effet, le robot 1 comporte des moyens de commande électronique configurés pour gérer le poids en eau de chaque chenille 3. Les moyens de commande électroniques sont configurés pour assurer une gestion égale du remplissage et du vidage du ou des ballasts 6 de chaque chenille 3.

Il est à noter que les moyens de commande électronique comportent un processeur équipé d'une mémoire vive. Le processeur est également couplé à une mémoire de stockage Les moyens de commande électronique sont ainsi configurés pour stocker et exécuter des algorithmes. Les moyens de commande électronique comprennent également une interface homme-machine afin de piloter le robot 1.

Comme illustré aux figures 2, 6 et 7, le robot subaquatique 1 comprend des flotteurs 5 permanents solidaires du châssis 3. Ici, chaque flotteur 5 est solidaire d'une aile 202 du châssis 2. Chaque flotteur 5 est positionné supérieurement par rapport aux chenilles 3 de déplacement. En particulier, les flotteurs 5 sont solidarisés à la face inférieure de chaque aile 202 du châssis 2. Dans cet exemple, les flotteurs 5 sont disposés dans l'espace ménagé entre le châssis 2 et les chenilles 3. Les flotteurs 5 sont réalisés dans un matériau naturel ou synthétique qui possède de bonnes propriétés de flottabilité résistant à la pression. A titre indicatif, il est possible d'utiliser un matériau synthétique tel que du polyuréthane expansé.

Un nombre déterminé de flotteurs 5 est installé au niveau de chaque aile 202 du châssis 2. Ce nombre est déterminé par l'utilisateur en fonction de l'environnement aquatique dans lequel le robot 1 est amené à être utilisé. Cependant, le nombre de ces flotteurs 5 doit être identique sous chaque aile 202 du châssis 2. Comme pour la gestion des ballasts 6, il est important que chaque aile 202 dispose de propriété de flottabilité identique afin de permettre un déplacement régulier du robot 1 sur les fonds aquatiques.

Comme illustré aux figures 4 à 7, le robot subaquatique 1 comporte également une tête de dragage 4. Selon l'invention, la tête de dragage 4 est configurée pour excaver et aspirer des sédiments naturels. A cet effet, la tête de dragage 4 comporte des moyens d'excavation de sédiments. A titre indicatif, les moyens d'excavation peuvent comprendre une fraiseuse. En outre, la tête de dragage 4 est montée sur le châssis 2. Plus précisément, la tête de dragage 4 est montée sur le corps central 201 du châssis 2.

Avantageusement, la tête de dragage 4 est mobile au moins entre deux positions, une première position déployée et une deuxième position rétractée.

Dans l'exemple de la figure 4, la tête de dragage 4 est en position déployée. Dans cette position, la tête de dragage 4 est saillante des chenilles 3 de déplacement. Plus précisément, la tête de dragage 4 est saillante de la face inférieure 302 de chaque chenilles 3. Dans cette position, la tête de dragage 4 assure la réduction de l'embâcle situé sous les chenilles 3.

Dans l'exemple de la figure 5, la tête de dragage 4 est en position rétractée. Dans cette position, la tête de dragage 4 est rétractée à proximité du châssis 2. Avantageusement, la position rétractée de la tête de dragage 4 permet de la dégager d'embâcles qu'elle ne peut réduire tels que des troncs d'arbre, structure métallique etc. Il est ainsi possible de protéger la tête de dragage 4 au cours d'une opération lorsqu'un embâcle non réductible est identifié.

Comme illustrée aux figures 6 et 7, la tête de dragage 4 peut prendre au moins deux positions déployées supplémentaires décalées radialement par rapport à la première position déployée. Selon cette configuration, la tête de dragage 4 est articulée selon deux axes X, Y. Le premier axe X permet de passer de la position rétractée à la première position déployée. Alors que le second axe Y permet de passer de la première position déployée aux deux autres positions déployées. Avantageusement, les deux positions déployées supplémentaires permettent, en limitant les déplacements du robot 1, d'optimiser la surface de réduction de l'embâcle.

La tête de dragage 4 est articulée selon deux axes X, Y via un mécanisme hydraulique solidaire du châssis 2. Le mécanisme hydraulique et la fixation de la tête de dragage 4 sont protégées au travers d'une cage 400. La cage 400 de protection est montée solidaire de la partie central 201 du châssis 2. La tête de dragage 4 est fixée à la partie centrale 201 du châssis 2 au niveau de la cage 400. En particulier, la tête de dragage 4 est solidarisée au centre de la partie centrale 201 selon un axe X-X. L'axe X-X est situé au centre de la partie centrale 201 et constitue l'axe du centre de gravité du robot 1. Comme illustré aux figures 6 et 7, l'axe X-X est perpendiculaire de l'axe Y-Y. La cage 400 contribue notamment à préserver l'intégrité du robot 1 en cas de collision avec un embâcle non réductible. Comme illustré aux figures 2 à 7, lorsque la tête de dragage 4 est en position rétractée, elle est toujours comprise dans les dimensions hors-tout du robot subaquatique 1. Ceci permet de protéger la tête de dragage 4 d'embâcles non réductibles lorsque le robot 1 se déplace.

Comme illustré aux figures 2 et 4 à 7, le robot subaquatique 1 comprend un régleur 401. Dans cet exemple, le régleur 401 est solidaire de la cage 400. Le régleur 401 s'étend tout autour de cette cage 400 dans sa partie supérieure. De fait, le régleur 401 est surélevé par rapport aux chenilles 3 d'une distance déterminée. Ici, le régleur 401 peut être apparenté à un boudin fermé. Le régleur 401 est configuré pour faire varier de façon à fixer le poids en eau du robot subaquatique 1. A cet effet, le régleur 401 est constitué d'un corps creux rigide configuré pour recevoir un volume d'eau déterminé quel que soit la pression extérieure et/ou intérieur qui s'applique sur le régleur 401. Bien entendu, comme les ballasts 6, le régleur 401 est couplé avec un compresseur à air 60. Le compresseur à air 60 permet de gérer le remplissage en eau ou en air du régleur 401. Le compresseur à air 60 peut également être embarqué dans le robot subaquatique 1 ou disposé en surface tel que décrit précédemment.

Le régleur 401 équilibre la répartition du poids en eau du robot subaquatique 1 et contribue à permettre une immersion et/ou émersion du robot subaquatique 1 dans la colonne d'eau. La stabilisation générée par le régleur 401 permet lors d'une immersion et/ou émersion, selon une trajectoire rectiligne au sein de la colonne d'eau, de trouver un équilibre entre la poussée verticale et la flottabilité du robot 1. De fait, il est possible de tracter le robot subaquatique 1 en surface et de l'immerger à pic lorsqu'il est positionné au-dessus de son site de travail.

D'autres caractéristiques peuvent participer à stabiliser le robot subaquatique 1 lors d'une émersion et/ou d'une immersion au sein de la colonne d'eau. Dans l'exemple illustré aux figures 3, 6 et 7, la position centrale des centrales hydrauliques 7 de chaque chenille 3 contribue à stabiliser le centre de gravité du robot subaquatique 1. De même, la répartition des ballasts 6 de part et d'autre de chaque centrale hydraulique 7 peut contribuer à la stabilisation du robot subaquatique 1 au sein de la colonne d'eau. Enfin, comme illustré aux figures 4 et 5, le point de fixation de la tête de dragage 4 à la partie centrale 201 du châssis selon l'axe X-X contribue également à stabiliser le robot subaquatique 1 lorsqu'il transite au sein de la colonne d'eau.

Dans cet exemple, chaque position déployée supplémentaire est décalée selon un angle compris entre 10° et 50° par rapport à la première position déployée. Plus précisément, chaque position déployée supplémentaire est décalée selon un angle compris entre 20° et 40° par rapport à la première position déployée. De préférence, dans cet exemple, chaque position déployée supplémentaire est décalée selon un angle de 30° par rapport à la première position déployée Les deux positions déployées supplémentaires sont orientées selon un même axe mais dans deux directions opposées.

Par ailleurs, lorsque la tête de dragage 4 est saillante de la face inférieure 302 des chenilles 3 en position déployée (illustré aux figures 4, 6 et 7). Néanmoins le point de fixation selon l'axe X-X au châssis 2 fait que la tête de dragage 4 n'est jamais saillante des dimensions longitudinales du robot 1.

Selon une variante de l'invention, la tête de dragage 4 comprend une ouverture équipée d'une pompe aspirant les sédiments des fonds aquatiques. L'ouverture de la tête de dragage 4 peut également comprendre de moyens d'excavation de sédiments. Les moyens d'excavation peuvent comprendre une fraiseuse configurée pour excaver les sédiments des fonds aquatiques. De fait, la tête de dragage 4 est configurée, pour excaver les sédiments, les aspirer tout en les diluant avec l'eau de la retenue du barrage A.

En outre, le robot subaquatique 1 comporte des moyens de communication avec un poste de commande 11 distant. Le poste de commande 11 héberge les moyens de commande électronique du robot 1. Le poste de commande 11 peut être situé en surface comme illustré à la figure 1. Cependant, il est également possible de disposer un relai de communications en surface, et d'utiliser un poste de commande distant du site de traitement. Le pilotage du robot 1 s'effectue alors au travers d'un réseau de télécommunication tel qu'un réseau GSM, 2G, 3G, 4G, 5G etc. Bien entendu, il est préférable d'utiliser un réseau de télécommunication de type 4G ou de technologie supérieure pour optimiser le transfert de données. Le pilotage en temps réel du robot 1 nécessite une bande passante importante pour être optimisé. Avantageusement, cette caractéristique permet d'activer le robot 1 et d'effectuer le curage à distance sans qu'un opérateur se déplace sur site.

Les moyens de communication peuvent être de type filaire pour permettre une communication surface-subaquatique de qualité. A titre indicatif, il est possible d'utiliser des fibres optiques comme moyens de communication. Les moyens de communication s'étendent entre le robot 1 et le poste de commande 11 distant. Les moyens de communication s'étendent au travers d'un ombilical 100 (illustré à la figure 1). Les moyens de communication permettent à un opérateur de piloter le robot 1 via l'interface homme-machine des moyens de commande électroniques.

L'ombilical 100 comporte des moyens de flottaison tels que des bouées ou une gaine flottante. De plus, l'ombilical 100 permet également de véhiculer des câbles électriques moyenne tension afin d'alimenter le robot subaquatique 1 en énergie électrique.

Selon l'invention, lesdits câbles électriques peuvent véhiculer un courant moyenne tension compris entre 2000 et 6000 volts. Le poste de commande 11 peut comprendre un transformateur capable de transformer du courant électrique basse tension en courant électrique moyenne tension ou un transformateur capable de transformer du courant électrique haute tension en courant électrique moyenne tension.

Il convient de préciser que lorsque le compresseur 60 à air couplé aux ballasts 6 est disposé en surface, l'ombilical 100 comporte un conduit d'air flexible d'alimentant le ou les au ballast(s) 6.

Comme illustré aux figures 3, 6 et 7, le robot subaquatique 1 comporte au moins une centrale hydraulique 7. La centrale hydraulique 7 est connectée aux câbles électriques qui alimentent le robot 1 en énergie électrique. Dans cet exemple, chaque chenille 3 comporte une centrale hydraulique 7. La centrale hydraulique 7 comporte au moins une pompe qui permet de créer un flux hydraulique qui alimente en énergie hydraulique au moins les effecteurs de la chenille 3 : moyens moteurs, moyens de guidage et système de tension 312. De préférence, au sein d'une chenille 3, les ballasts 6 sont répartis par paire de part et d'autre la centrale hydraulique 7 (illustré aux figures 3, 6 et 7). Cette caractéristique permet de varier le poids en eau du robot 1 de façon homogène. On tire de cette caractéristique la possibilité d'obtenir un déplacement rectiligne sur les fonds aquatiques. De plus, lors de l'immersion et/ou émersion du robot 1, cette configuration permet de trouver un équilibre entre la flottabilité du robot 1 et la poussée verticale (montée ou descente) au sein de la colonne d'eau.

Cependant, il est tout à fait possible d'alimenter les effecteurs de la chenille 3 directement en énergie électrique.

Comme illustré aux figures 1, 2 et 4 à 7, le robot 1 comporte un conduit de dragage 8 évacuant des sédiments dilués avec de l'eau. Dans cet exemple, le conduit de dragage 8 est relié à la tête de dragage 4. En particulier, le conduit de dragage 8 comporte des moyens de mesure du débit des sédiments dilués à l'eau. A titre indicatif, les moyens de mesure de débit peuvent être formés par un débitmètre volumétrique magnétique inductif, un débitmètre massique, un débitmètre à ultrason, un débitmètre à différentiel de pression etc. Les moyens de mesure de débit permettent de faire varier le débit d'aspiration du conduit de dragage 8 en fonction de divers paramètres. Par exemple, il est possible de faire varier le débit d'aspiration en fonction du débit de turbinage d'un barrage A.

En sus, le conduit de dragage 8 comporte en outre des moyens de mesure. Les moyens de mesure densimétrique permettent de faire varier la densité de sédiments dans l'eau extraite du site de dragage. La densité sédimentaire peut varier en fonction de différents paramètres. Par exemple, il est possible de faire varier la densité sédimentaire aspirée en fonction de la densité sédimentaire en amont d'un barrage A. Il est également possible de faire varier la densité sédimentaire aspirée en fonction de la densité sédimentaire en aval d'un barrage A. De préférence, il est possible de faire varier la densité sédimentaire aspirée en fonction de la densité sédimentaire en amont et en aval d'un barrage A.

Les moyens de commande électronique assurent la gestion du débit d'eau et la concentration des sédiments dilués en fonction desdits paramètres. Avantageusement, il est possible de contrôler le débit et la concentration de sédiments dilués en fonction du turbinage du barrage. Ceci en faisant varier la vitesse de fonctionnement de la pompe de dragage. Il est également possible d'influer sur la concentration en sédiments dilués dans le flux de dragage en faisant varier position de la tête de dragage 4. De même, il est possible de faire varier la concentration en sédiments dilués en faisant varier la vitesse de déplacement du robot 1.

La possibilité d'ajuster la concentration en sédiments dilués dans le flux de dragage permet avantageusement d'opérer un curage en respectant la faune et la flore vivant dans le cours d'eau situé en aval du barrage A.

Un deuxième aspect de l'invention concerne un système de curage 10 des fonds aquatiques d'une retenue d'eau d'un barrage A.

Comme illustré à la figure 1, le système de curage 10 comprend un robot 1 subaquatique définit selon l'invention.

Le système de curage 10 comprend un poste de commande 11 à distance du robot 1 subaquatique. Le poste de commande 11 peut être disposé en surface du site de curage. A titre indicatif, le poste de commande 11 peut être installé sur une berge. Toutefois, il est également envisageable que le poste de commande 11 soit installé sur une barge flottante. Comme évoqué précédemment, le poste de commande 11 est relié au robot 1 par des moyens de communication filaire subaquatique. Les communications sans fils ne sont pas envisageables entre le poste de commande 11 situé en surface et le robot 1 progressant sur les fonds aquatiques. Ainsi, le robot 1 est relié au poste de commande 11 au travers d'un ombilical 100 comme décrit précédemment.

Par ailleurs, le système de curage 10 comporte des moyens d'alimentation en énergie du robot 1 subaquatique. Avantageusement, ces moyens d'alimentation passent par l'ombilical 100 et alimentent le robot 1 en énergie électrique. De préférence, les moyens d'alimentation alimentent le robot 1 en courant électrique moyenne tension. A cet effet, les moyens d'alimentation peuvent être reliés directement à un poste de transformation moyenne tension du réseau électrique

Dans l'exemple illustré à la figure 1, le système de curage 10 comprend un conduit de dragage 8. Comme cela est décrit précédemment, à une première extrémité, le conduit de dragage 8 est connecté à la tête de dragage 4 du robot 1 subaquatique. L'extrémité opposée du conduit de dragage 8 constitue un orifice d'échappement 12 de sédiments dilués. Dans cet exemple, l'échappement 12 est disposé à proximité de l'admission B d'une turbine du barrage A. Ceci constitue un rejet indirect des sédiments dilués en aval du barrage A. Cependant, il est également possible que l'échappement 12 soit situé en aval du barrage A. Dans ce cas de figure, le rejet des sédiments dilués est effectué directement en aval du barrage A.

Selon l'invention le conduit de dragage 8 permet de diffuser des sédiments dilués à l'eau en aval du barrage A. A cet effet, le conduit de dragage 8 comprend un échappement qui rejette directement ou indirectement les sédiments dilués en aval du barrage A.

Avantageusement, le conduit de dragage 8 contribue, d'une part, à évacuer les sédiments du bassin de rétention, et d'autre part, à resédimenter le lit du cours d'eau qui se situe en aval du barrage A.

En sus, le système de curage 10 comprend des moyens de mesure configurés pour mesurer la turbidité de l'eau en amont du barrage A. Les moyens de mesure de la turbidité de l'eau peuvent être constitués par une sonde densimétrique disposée dans la retenue d'eau en amont du barrage A. Les moyens de mesure sont connectés au poste de commande 11 afin de transmettre les données collectées.

Le système de curage 10 peut également posséder des moyens de mesure configurés pour mesurer le débit de turbinage du barrage A. Les moyens de mesure sont connectés au poste de commande afin de transmettre les données collectées. En pratique, les moyens de mesure du système de curage 10 sont connectés aux moyens de mesure de turbinage du barrage A.

Le système de curage 10 comprend des moyens de communication configurés pour connecter les moyens de mesure au poste de commande 11. Dans ce contexte, les moyens de mesure peuvent être indifféremment sans fil au travers d'un réseau de communication à moyenne portée tel que radio, ou filaire.

Comme illustré à la figure 1, le système de curage 10 des fonds aquatiques comporte en outre un système de triangulation acoustique.

Le système de triangulation acoustique 13 comprend un émetteur/récepteur à ultrasons qui permet d'obtenir des données permettant la modélisation du fond aquatique et la position du robot 1.

Il est à noter que le système de triangulation acoustique 13 est relié au poste de commande 11 afin de lui transmettre les données qu'il collecte.

Un troisième aspect de l'invention se rapporte à un procédé de curage des fonds aquatiques. De préférence, le procédé de curage des fonds aquatiques est mis en oeuvre pour le curage d'une retenue d'eau d'un barrage A. Le procédé met en oeuvre le système de curage 10 défini selon l'invention.

Le procédé de curage comporte une étape d'immersion d'un robot 1 subaquatique au niveau du site à traiter.

Le procédé de curage comporte une étape de curage des fonds aquatiques. Cette étape est effectuée par déplacement du robot 1 sur le fond aquatique. Le déplacement du robot 1 est effectué au travers de déplacements linéaires d'un côté à l'autre du site à traiter. En pratique, le robot 1 est piloté de manière à réaliser un premier aller linéaire d'un côté à l'autre du site à traiter. Lorsque le robot 1 achève son premier aller, il est décalé latéralement pour effectuer un retour selon une direction linéaire parallèle au premier aller. Les allers et retours du robot 1 sont répétés de façon à couvrir le site à traiter. De préférence, le robot 1 est piloté par un opérateur afin d'adapter ses déplacements au site à traiter.

Le procédé comprend également une étape de localisation en temps réel du robot 1. Cette étape est effectuée au travers du système de triangulation acoustique 13. Au travers des données que le système de triangulation acoustique 13 transmet au poste de commande 11, il est possible de modéliser la position et le déplacement du robot 1 sur les fonds aquatiques du site à traiter.

Il est à noter que le robot 1 comprend un sonar qui permet également d'identifier la position d'embâcles non réductibles tels que des troncs d'arbre, des déchets métalliques, ou des reliefs irréguliers tels que des rochers saillants. En pratique, ce type d'obstacle est contourné par le robot 1 afin de préserver son intégrité.

Le procédé peut également comprendre une étape d'ajustement du poids en eau du robot 1 afin d'optimiser sa progression sur les fonds aquatiques. Cette étape est effectuée comme décrit précédemment par gestion du remplissage/ vidage des ballasts 6.

Dans le cadre du curage de bassin de rétention d'un barrage A, le procédé comprend une étape de mesure la turbidité de l'eau en amont du barrage A. Cette étape est effectuée par les moyens de mesure décrits précédemment. Les données collectées sont transmises au poste de commande 11.

Toujours dans le cadre d'un curage de bassin de rétention d'un barrage A, le procédé peut comprendre une étape de mesure du débit de turbinage du barrage A. Cette étape est effectuée comme décrit précédemment, les données étant transmises au poste de commande 11.

Le procédé de curage d'un bassin de rétention d'un barrage A, comprend une étape d'ajustement du débit et/ou de la densimétrie des sédiments aspirés par le robot subaquatique 1. Cet ajustement est opéré en fonction du débit de turbinage du barrage A et/ou de la mesure de turbidité de l'eau en amont du barrage A. Ledit ajustement peut être opéré en faisant varier la profondeur de dragage. Comme décrit précédemment, l'ajustement de la position de la tête de dragage 4 contribue à faire varier la profondeur de dragage. En effet, lorsque la tête de dragage 4 est placée dans une position déployée, elle aspire plus de sédiments qu'en position rétractée.

De plus, la vitesse de déplacement du robot 1 peut être également ajustée afin d'ajuster la concentration en sédiments aspirés par la tête de dragage 4. Un déplacement plus rapide entrainera une plus grande concentration en sédiments aspirés et augmentera donc le taux de sédiments dilués.

Le procédé de curage comprend également une étape de rejet des sédiments dilués en aval du barrage A. Cette étape peut être effectuée indifféremment de deux possibilités différentes. Une première possibilité consiste à déployer un conduit de dragage 8 entre le robot 1 et l'admission d'une ou plusieurs turbine(s) du barrage A. Selon cette possibilité, les sédiments dilués sont transférés dans le cours d'eau en aval du barrage au travers des turbines. Et une seconde possibilité consiste à déployer un conduit de dragage 8 entre le robot 1 et le cours d'eau aval du barrage A. Selon cette possibilité, le conduit de dragage 8 est installé de manière à contourner le barrage A.

Le choix d'utiliser l'une des deux possibilités est à la discrétion de l'opérateur du procédé. La topologie du site du barrage guide en général le choix de la méthode de rejet des sédiments en aval du barrage A.

Avantageusement, tenir compte du débit de turbinage et/ou de la mesure de turbidité de l'eau en amont du barrage permet d'inscrire cette solution technique dans une démarche de développement durable. En effet, ceci permet de préserver la faune et la flore qui colonisent le court d'eau en aval du barrage en évitant des largages sédimentaires concentrés. Au travers de cette solution, l'on cherche à reproduire l'écoulement naturel des sédiments au sein d'un cours d'eau non entravé par un barrage.

Les différentes étapes du procédé selon l'invention sont contrôlées au niveau du poste de commande 11.

## Revendications

1. Robot subaquatique (1) de curage configuré pour se déplacer et curer des fonds aquatiques, le robot subaquatique (1) comportant :
- un châssis (2) qui s'étend longitudinalement selon un axe (Y-Y), le châssis (2) comprenant une partie centrale (201) et deux ailes (202) situées de part et d'autre de la partie centrale (201),
- deux chenilles (3) de déplacement qui définissent les dimensions hors-tout du robot subaquatique (1) selon l'axe (Y-Y), chaque chenille (3) de déplacement étant solidaire d'une aile (202) du châssis (2), les chenilles (3) de déplacement sont configurées pour se déplacer sur un sol vaseux, et
- une tête de dragage (4) montée sur le châssis (2), la tête de dragage (4) étant configurée pour excaver et aspirer des sédiments naturels,
- des moyens d'ajustement de la flottabilité du robot subaquatique (1), les moyens d'ajustement permettent d'ajuster la poussée d'Archimède qui s'applique sur le robot (1) de sorte que les chenilles (3) de déplacement parviennent à prendre appui sur un milieu hétérogène dont la densité fluctue tel qu'un sol vaseux,
**caractérisé en ce que** la tête de dragage (4) est solidarisée selon un axe central (X-X) de la partie centrale (201) du châssis (2), la tête de dragage (4) étant comprise dans les dimensions hors tout du robot subaquatique (1) selon l'axe (Y-Y).

2. Robot subaquatique (1) selon la revendication 1, **caractérisé en ce que** chaque chenille (3) comporte un bâtit et au moins une bande souple (308) montée rotative autour d'un bâtit, la bande souple (308) étant équipée de lames (309) qui s'étendent longitudinalement entre deux bords latéraux de la bande souple (308).

3. Robot subaquatique (1) selon la revendication 2, **caractérisé en ce qu'**il comporte, d'une part, des moyens d'entrainement en rotation de chaque chenille (3), et d'autre part, des moyens de guidage en rotation de chaque chenille (3) par glissement, le glissement étant guidé selon un axe longitudinal médian du bâtit de chaque chenille (3).

4. Robot subaquatique (1) selon la revendication 3, **caractérisé en ce que** les moyens d'entrainement comportent des patins (310) solidaires d'une bande souple (308) montée en rotation autour du bâtit d'une chenille (3), les moyens de guidage comprenant un rail disposé selon l'axe longitudinal médian du bâtit d'une chenille (3), les patins (310) étant engagés en glissement dans le rail.

5. Robot subaquatique (1) selon l'une des revendications 1 et 4, **caractérisé en ce qu'**il comprend un régleur (401) solidaire de la partie centrale (201) du châssis (2), le régleur (401) est configuré pour faire varier de façon à fixer le poids en eau du robot subaquatique (1).

6. Robot subaquatique (1) selon l'une des revendications 1 à 5, **caractérisé en ce que** la tête de dragage (4) est mobile au moins entre deux positions, une première position déployée dans laquelle tête de dragage (4) est saillante des chenilles (3) de déplacement, et une deuxième position dans laquelle la tête de dragage (4) est rétractée à proximité du châssis (2).

7. Robot subaquatique (1) selon la revendication 6, **caractérisé en ce que** la tête de dragage (4) est mobile au moins deux positions déployées supplémentaires décalées radialement par rapport à la première position déployée, de préférence, chaque position déployée supplémentaire est décalée selon un angle compris entre 10° et 50° par rapport à la première position déployée.

8. Robot subaquatique (1) selon l'une des revendications 1 à 7, **caractérisé en ce que** les moyens d'ajustement comportent au moins un ballast (6) solidaire du châssis (2), le ballast (6) étant couplé avec au moins un compresseur (60) qui assure le remplissage ou la vidange du ballast (6) en fonction de la densité du fond aquatique sur lequel le robot (1) se déplace.

9. Robot subaquatique (1) selon l'une des revendications 1 à 8, **caractérisé en ce que** la tête de dragage (4) comprend une ouverture équipée de moyens d'excavation de sédiment et d'une pompe aspirant et diluant les sédiments d'un fond aquatique.

10. Robot subaquatique (1) selon l'une des revendications 1 à 9, **caractérisé en ce qu'**il comporte un conduit de dragage (8) évacuant des sédiments dilués avec de l'eau, le conduit de dragage (8) étant relié à la tête de dragage (4).

11. Robot subaquatique (1) selon la revendication 10, **caractérisé en ce que** le conduit de dragage (8) comporte, d'une part, des moyens de mesure du débit des sédiments dilués à l'eau, et d'autre part, des moyens de mesure densimétrique afin de contrôler la concentration en sédiments dilués.

12. Robot subaquatique (1) selon l'une des revendications 1 à 11, **caractérisé en ce qu'**il comporte des moyens de communication avec un poste de commande (11) distant, le robot (1) comportant également des moyens d'alimentation en énergie qui sont reliés au poste commande (11).

13. Système de curage (10) des fonds aquatiques d'une retenue d'eau d'un barrage (A), **caractérisé en ce qu'**il comporte :
- un robot subaquatique (1) défini selon l'une des revendications 1 à 12,
- des moyens d'alimentation en énergie du robot subaquatique (1),
- un poste de commande (11) à distance du robot subaquatique (1),
- un conduit de dragage (8) dont l'échappement de sédiments dilués est relié à un cours d'eau en aval du barrage (A),
- des moyens de mesure du débit de turbinage du barrage (A), et
- des moyens de communication configurés pour relier les moyens de mesure et le robot (1) au poste de commande (11).

14. Système de curage (10) des fonds aquatiques selon la revendication 13, **caractérisé en ce qu'**il comporte au moins un système de triangulation acoustique (13) qui permet de contrôler le déplacement du robot (1) sur des fonds aquatiques.

15. Procédé de curage des fonds aquatiques d'une retenue d'eau d'un barrage (A), **caractérisé en ce qu'**il comporte les étapes suivantes :
- Immerger un robot subaquatique (1) selon l'une des revendications 1 à 12,
- Curer les fonds aquatiques à l'aide du robot (1),
- Mesurer le débit de turbinage dudit barrage (A),
- Ajuster le débit et/ou la concentration des sédiments dans le flux de dragage aspiré par le robot subaquatique (1), au cours de ses opérations de curage, en fonction du débit de turbinage dudit barrage (A), et
- Rejeter les sédiments dilués à une concentration déterminée en aval dudit barrage (A).

## Patentansprüche

1. Unterwasserreinigungsroboter (1), der konfiguriert ist, um sich zu bewegen und aquatische Böden zu reinigen, wobei der Unterwasserroboter (1) aufweist:
- einen Rahmen (2), der sich in Längsrichtung entlang einer Achse (Y-Y) erstreckt, der Rahmen (2) umfassend einen Mittelteil (201) und zwei Flügel (202), die sich auf beiden Seiten des Mittelteils (201) befinden,
- zwei Bewegungsraupenketten (3), die die größten Abmessungen des Unterwasserroboters (1) entlang der Achse (Y-Y) definieren, wobei jede Bewegungsraupenkette (3) mit einem Flügel (202) des Rahmens (2) einstückig ist, wobei die Bewegungsraupenketten (3) zum sich Bewegen auf einem schlammigen Grund konfiguriert sind, und
- einen Baggerkopf (4), der an dem Rahmen (2) montiert ist, wobei der Baggerkopf (4) zum Ausheben und Aufsaugen von natürlichen Sedimenten konfiguriert ist,
- Mittel zum Anpassen des Auftriebs des Unterwasserroboters (1), wobei die Anpassungsmittel es ermöglichen, den hydrostatischen Auftrieb, der auf den Roboter (1) aufgewendet wird, so anzupassen, dass die Bewegungsraupenketten (3) auf einem heterogenen Medium zur Anlage kommen, dessen Dichte schwankt, wie zum Beispiel ein schwammiger Grund,
**dadurch gekennzeichnet, dass** der Baggerkopf (4) entlang einer Mittelachse (X-X) des Mittelteils (201) des Rahmens (2) fest verbunden ist, wobei der Baggerkopf (4) in den größten Abmessungen des Unterwasserroboters (1) entlang der Achse (Y-Y) enthalten ist.

2. Unterwasserroboter (1) nach Anspruch 1, **dadurch gekennzeichnet, dass** jede Raupenkette (3) ein Gestell und mindestens ein flexibles Band (308) umfasst, das um ein Gestell drehbar montiert ist, wobei das flexible Band (308) mit Lamellen (309) versehen ist, die sich in Längsrichtung zwischen zwei Seitenrändern des flexiblen Bands (308) erstrecken.

3. Unterwasserroboter (1) nach Anspruch 2, **dadurch gekennzeichnet, dass** er einerseits Drehantriebsmittel jeder Raupenkette (3) und andererseits Drehführungsmittel jeder Raupenkette (3) durch Gleiten umfasst, wobei das Gleiten entlang einer mittleren Längsachse des Gestells jeder Raupenkette (3) geführt wird.

4. Unterwasserroboter (1) nach Anspruch 3, **dadurch gekennzeichnet, dass** die Antriebsmittel Gleitbacken (310) aufweisen, die mit einem flexiblen Band (308) einstückig sind, das um das Gestell einer Raupenkette (3) drehbar montiert ist, die Führungsmittel umfassend eine Schiene, die entlang der mittleren Längsachse des Gestells einer Raupenkette (3) angeordnet ist, wobei die Gleitbacken (310) in der Schiene gleitend in Eingriff genommen sind.

5. Unterwasserroboter (1) nach einem der Ansprüche 1 und 4, **dadurch gekennzeichnet, dass** er einen Justierer (401) umfasst, der mit dem Mittelteil (201) des Rahmens (2) einstückig ist, wobei der Justierer (401) zum Variieren konfiguriert ist, um das Gewicht in Wasser des Unterwasserroboters (1) festzulegen.

6. Unterwasserroboter (1) nach einem der Ansprüche 1 bis 5, **dadurch gekennzeichnet, dass** der Baggerkopf (4) mindestens zwischen zwei Positionen verschiebbar ist, einer ersten ausgefahrenen Position, in der der Baggerkopf (4) von den Bewegungsraupenketten (3) vorsteht, und einer zweiten Position, in der der Baggerkopf (4) in die Nähe des Rahmens (2) zurückgezogen ist.

7. Unterwasserroboter (1) nach Anspruch 6, **dadurch gekennzeichnet, dass** der Baggerkopf (4) verschiebbar ist, wobei mindestens zwei zusätzliche ausgefahrene Positionen relativ zu der ersten ausgefahrenen Position radial verlagert sind, vorzugsweise wobei jede zusätzliche ausgefahrene Position in einem Winkel zwischen 10° und 50° relativ zu der ersten ausgefahrenen Position verlagert ist.

8. Unterwasserroboter (1) nach einem der Ansprüche 1 bis 7, **dadurch gekennzeichnet, dass** die Anpassungsmittel mindestens einen Ballast (6) umfassen, der mit dem Rahmen (2) einstückig ist, wobei der Ballast (6) mit mindestens einem Verdichter (60) gekoppelt ist, der die Füllung oder die Leerung des Ballasts (6) in Abhängigkeit von der Dichte des aquatischen Bodens gewährleistet, auf dem sich der Roboter (1) bewegt.

9. Unterwasserroboter (1) nach einem der Ansprüche 1 bis 8, **dadurch gekennzeichnet, dass** der Baggerkopf (4) eine Öffnung umfasst, die mit einem Sedimentaushubmitteln und einer Pumpe ausgestattet ist, die die Sedimente von einem aquatischen Boden aufsaugt und verdünnt.

10. Unterwasserroboter (1) nach einem der Ansprüche 1 bis 9, **dadurch gekennzeichnet, dass** er eine Baggerleitung (8) aufweist, die mit Wasser verdünnte Sedimente abführt, wobei die Baggerleitung (8) mit dem Baggerkopf (4) verbunden ist.

11. Unterwasserroboter (1) nach Anspruch 10, **dadurch gekennzeichnet, dass** die Baggerleitung (8) einerseits Mittel zum Messen des Durchsatzes des mit Wasser verdünnten Sediments und andererseits Mittel zum densimetrischen Messen umfasst, um die Konzentration an verdünnten Sedimenten zu steuern.

12. Unterwasserroboter (1) nach einem der Ansprüche 1 bis 11, **dadurch gekennzeichnet, dass** er Mittel zum Kommunizieren mit einer entfernten Kommandozentrale (11) umfasst, wobei der Roboter (1) auch Energieversorgungsmittel aufweist, die mit der Kommandozentrale (11) verbunden sind.

13. Reinigungssystem (10) für aquatische Böden eines Wasserstaus einer Talsperre (A), **dadurch gekennzeichnet, dass** es aufweist:
- einen Unterwasserroboter (1), der nach einem der Ansprüche 1 bis 12 definiert ist, Mittel zum Versorgen des Unterwasserroboters (1) mit Energie,
- eine Kommandozentrale (11), die von dem Unterwasserroboter (1) entfernt ist, eine Baggerleitung (8), deren Auslass von verdünnten Sedimenten mit einem Wasserlauf stromabwärts der Talsperre (A) verbunden ist,
- Mittel zum Messen des Durchsatzes der Turbinen der Talsperre (A) und Kommunikationsmittel, die zum Verbinden der Messmittel und des Roboters (1) mit der Kommandozentrale (11) konfiguriert sind.

14. Reinigungssystem (10) für aquatische Böden nach Anspruch 13, **dadurch gekennzeichnet, dass** es mindestens ein System (13) einer akustischen Triangulation umfasst, das es ermöglicht, die Bewegung des Roboters (1) auf aquatischen Böden zu steuern.

15. Verfahren zum Reinigen von aquatischen Böden eines Wasserstaus einer Talsperre (A), **dadurch gekennzeichnet, dass** es die folgenden Schritte aufweist:
- Untertauchen eines Unterwasserroboters (1) nach einem der Ansprüche 1 bis 12,
- Reinigen von aquatischen Böden unter Verwendung des Roboters (1),
- Messen des Durchsatzes der Talsperre (A),
- Anpassen des Durchsatzes und/oder der Konzentration von Sedimenten in dem Baggerfluss, der durch den Unterwasserroboter (1) im Laufe seiner Reinigungsabläufe aufgesaugt wird, in Abhängigkeit von dem Durchsatz der Turbinen der Talsperre (A), und
- Ausscheiden der auf eine bestimmte Konzentration verdünnten Sedimente stromabwärts der Talsperre (A).

## Claims

1. An underwater cleaning robot (1) designed to be able to move and to clean aquatic beds, the underwater robot (1) comprising:
- a chassis (2) that extends longitudinally along an axis (Y-Y), the chassis (2) comprising a central part (201) and two wings (202) located on either side of the central part (201),
- two movement tracks (3) which define the overall dimensions of the underwater robot (1) along the axis (Y-Y), each movement track (3) being secured to a wing (202) of the chassis (2), and the movement tracks (3) are designed to move over muddy ground, and
- a dredging head (4) mounted on the chassis (2), the dredging head (4) being designed to excavate and suck up natural sediment,
- means for adjusting the buoyancy of the underwater robot (1), the adjustment means make it possible to adjust the Archimedean thrust which applies to the robot (1) so that the movement tracks (3) come to bear on a heterogeneous medium of which the density fluctuates, such as muddy ground,
**characterized in that** the dredging head (4) is secured along a central axis (X-X) of the central part (201) of the chassis (2), the dredging head (4) being included in the overall dimensions of the underwater robot (1) along the axis (Y-Y).

2. The underwater robot (1) according to claim 1, **characterized in that** each track (3) comprises a frame and at least one flexible strip (308) rotatably mounted about a frame, the flexible strip (308) being equipped with blades (309) that extend longitudinally between two lateral edges of the flexible strip (308).

3. The underwater robot (1) according to claim 2, **characterized in that** it comprises, on the one hand, means for rotating each track (3) and, on the other hand, means for guiding each track (3) in rotation by sliding, the sliding being guided along a central longitudinal axis of the frame of each track (3).

4. The underwater robot (1) according to claim 3, **characterized in that** the drive means comprise pads (310) that are secured to a flexible strip (308) rotatably mounted about the frame of a track (3), the guide means comprising a rail arranged along the central longitudinal axis of the frame of a track (3), the pads (310) being slidingly engaged in the rail.

5. The underwater robot (1) according to any of claims 1 and 4, **characterized in that** it comprises an adjuster (401) secured to the central part (201) of the chassis (2), and the adjuster (401) is designed to vary, so as to fix, the water weight of the underwater robot (1).

6. The underwater robot (1) according to any of claims 1 to 5, **characterized in that** the dredging head (4) is movable at least between two positions, a first deployed position in which the dredging head (4) protrudes from the movement tracks (3), and a second position in which the dredging head (4) is retracted close to the chassis (2).

7. The underwater robot (1) according to claim 6, **characterized in that** the dredging head (4) is movable at least two additional deployed positions that are offset radially relative to the first deployed position, preferably each additional deployed position is offset at an angle of between 10° and 50° relative to the first deployed position.

8. The underwater robot (1) according to any of claims 1 to 7, **characterized in that** the adjustment means comprise at least one ballast (6) secured to the chassis (2), the ballast (6) being coupled to at least one compressor (60) which ensures the filling or emptying of the ballast (6) according to the density of the aquatic bed on which the robot (1) is moving.

9. The underwater robot (1) according to any of claims 1 to 8, **characterized in that** the dredging head (4) comprises an opening provided with sediment excavation means and a pump for sucking up and diluting the sediment from an aquatic bed.

10. The underwater robot (1) according to any of claims 1 to 9, **characterized in that** it comprises a dredging duct (8) for discharging sediment diluted with water, the dredging duct (8) being connected to the dredging head (4).

11. The underwater robot (1) according to claim 10, **characterized in that** the dredging duct (8) comprises, on the one hand, means for measuring the flow rate of the sediment diluted with water and, on the other hand, densimetric measurement means for controlling the concentration of diluted sediment.

12. The underwater robot (1) according to any of claims 1 to 11, **characterized in that** it comprises means for communication with a remote control station (11), the robot (1) also comprising energy supply means which are connected to the control station (11).

13. A system (10) for cleaning aquatic beds of a water reservoir for a dam (A), **characterized in that** it comprises:
- an underwater robot (1) defined according to any of claims 1 to 12, means for supplying energy to the underwater robot (1),
- a control station (11) remote from the underwater robot (1), a dredging duct (8) of which the diluted sediment outlet is connected to a water course downstream of the dam (A),
- means for measuring the turbine flow rate of the dam (A), and communication means designed to connect the measurement means and the robot (1) to the control station (11).

14. The aquatic bed cleaning system (10) according to claim 13, **characterized in that** it comprises at least one acoustic triangulation system (13) which makes it possible to control the movement of the robot (1) on aquatic beds.

15. A method for cleaning aquatic beds of a water reservoir for a dam (A), **characterized in that** it comprises the following steps:
- submerging an underwater robot (1) according to any of claims 1 to 12,
- cleaning the aquatic beds using the robot (1),
- measuring the turbine flow rate of said dam (A),
- adjusting the flow rate and/or concentration of the sediment in the dredging stream sucked up by the underwater robot (1), during its cleaning operations, according to the turbine flow rate of said dam (A), and
- rejecting the diluted sediment at a specified concentration downstream of said dam (A).
